# EUROPÄISCHE PATENTSCHRIFT

(11) **EP 3 840 914 B1**
(45) Veröffentlichungstag und Bekanntmachung des Hinweises auf die Patenterteilung: **07.06.2023**
(21) Anmeldenummer: 19753063.7
(22) Anmeldetag: 12.08.2019
(51) Int. Cl.: B23Q 1/28, B23Q 1/58, B23Q 11/00, F16C 29/00

(54) **VERSTELLVORRICHTUNG FÜR EINE WERKZEUGMASCHINE MIT VERRINGERTER SCHWINGUNGSNEIGUNG**
ADJUSTING DEVICE FOR A MACHINE TOOL WITH A REDUCED TENDENCY TO VIBRATE
DISPOSITIF D'AJUSTEMENT POUR UNE MACHINE-OUTIL PRÉSENTANT UNE TENDANCE À L'OSCILLATION RÉDUITE

(30) Priorität: 24.08.2018 CH 10232018
(43) Veröffentlichungstag der Anmeldung: 30.06.2021
(73) Patentinhaber: Reishauer AG, 8304 Wallisellen (CH)
(72) Erfinder: JAKOB, Ronald, 8605 Gutenswil (CH); MROS, Michael, 76356 Weingarten (DE); EGER, André, 4323 Wallbach (CH)
(74) Vertreter: Detken, Andreas
(86) Internationale Anmeldenummer: PCT/EP2019/071575
(87) Internationale Veröffentlichungsnummer: WO 2020/038751

(56) Entgegenhaltungen:
- EP-A1- 0 673 709
- WO-A1-94/09287
- DE-A1- 3 742 965
- DE-A1- 4 318 428
- US-A- 5 462 361

## Beschreibung

### TECHNISCHES GEBIET

Die vorliegende Erfindung betrifft eine motorisch angetriebene Verstellvorrichtung für eine Werkzeugmaschine, insbesondere eine Verzahnmaschine, eine damit ausgestattete Werkzeugmaschine sowie ein Verfahren zur Bearbeitung eines Werkstücks mit einer solchen Werkzeugmaschine.

### STAND DER TECHNIK

Seit den Anfängen des Verzahnmaschinenbaus sehen sich Konstrukteure mit unerwünschten Schwingungen in Verzahnmaschinen konfrontiert. H. Schriefer et al., "Kontinuierliches Wälzschleifen von Verzahnungen", Reishauer AG 2008, ISBN 978-3-033-01447-3, beschreibt auf den Seiten 84 bis 161 und 471 bis 571 den Aufbau und die Funktionsweise von modernen Verzahnmaschinen. In derartigen Verzahnmaschinen werden üblicherweise weit über tausend Bauteile verbaut, die im Betrieb mit einer unüberschaubaren Zahl von Freiheitsgraden schwingen. Durch dieses schwingende System entstehen unerwünschte Relativbewegungen zwischen Werkzeug und Werkstück, welche zwangsläufig zu einer Veränderung der Spanungsdicke und damit der Schnittkraft führen und direkt das Fertigungsergebnis beeinflussen. Eine veränderte Schnittkraft wirkt wiederum auf die endlich steife Maschinenstruktur zurück, wodurch sich ein geschlossener Wirkungskreis der dynamischen Interaktion zwischen Zerspanungsprozess und Maschinenstruktur ergibt und selbsterregte Schwingungen verursacht werden. Diese Erscheinungen werden als Vibrationen in den Baugruppen der Verzahnmaschine wahrgenommen.

Selbst kleinste Relativbewegungen zwischen Werkzeug und Werkstück im Mikrometerbereich, wie sie durch sogenannte vagabundierende Schwingungen entstehen können, können zu störenden Fertigungsabweichungen führen. Solche Fertigungsabweichungen wirken sich besonders negativ in der Endfertigung eines Zahnrades aus, weil das Zahnrad nach der Endfertigung ohne weitere Nachbearbeitung in ein Getriebe eingebaut wird. Insbesondere können sich solche Fertigungsabweichungen als Welligkeiten auf den Zahnflanken manifestieren, welche beim Einsatz in einem Getriebe störende, meist hochfrequente Geräusche verursachen. Solche Geräusche werden auch als "Geisterfrequenzen" bezeichnet. Speziell in Kraftfahrzeugen werden die Motorgeräusche immer geringer. Daher werden Getriebegeräusche, und besonders deren hochfrequente Anteile, zunehmend als störend wahrgenommen. In elektrisch angetriebenen Fahrzeugen können diese Geräusche unter Umständen sogar das Fahrgeräusch dominieren.

Günther Gravel, "Bestimmung von Welligkeiten auf Zahnflanken", GETPRO Kongress zur Getriebeproduktion, Würzburg, März 2009 zeigt die Schwierigkeiten bei der korrekten Erfassung von Welligkeiten auf Zahnflanken, die zu "Geisterfrequenzen" führen, auf und schlägt hierfür ein neues Auswerteverfahren vor.

Es hat schon vielfältige Anstrengungen gegeben, unerwünschte Schwingungen in Verzahnmaschinen zu vermeiden oder zu unterdrücken.

Matthias Baur, "Aktives Dämpfungssystem zur Ratterunterdrückung an spanenden Werkzeugmaschinen", Dissertation, Technische Universität München 2014, fasst auf den Seiten 3 bis 31 den diesbezüglichen Stand der Technik zusammen und schlägt davon ausgehend vor, Schwingungen durch aktive Dämpfungssysteme (Active Vibration Control, AVC) zu unterdrücken. Insbesondere wird auf den Seiten 67 bis 70 und 129 bis 139 vorgeschlagen, ein aktives Dämpfungssystem an der Werkstückspindel einer Wälzschleifmaschine einzusetzen.

DE 10 2010 023 190 A1 schlägt vor, in einer Werkzeugmaschine zur spanabhebenden Werkstückbearbeitung Ratterschwingungen zu vermeiden, indem der Schnitt- und/oder Vorschubbewegung eine modulierende Zusatzbewegung überlagert wird.

In EP 2 774 709 A2 wird vorgeschlagen, die Zahnflanken einer Verzahnung gezielt mit periodischen Welligkeitskorrekturen oder Welligkeitsmodifikationen zu versehen. Dazu werden Drehwegfehlermessungen von Zahnradpaarungen in einer Verzahnungsmesseinrichtung oder einem Getriebe durchgeführt, um einen Drehfehlerverlauf zu bestimmen. Dieses Messergebnis dient als Eingangsgrösse zur Definition der Amplitude, Frequenz und Phasenlage für die periodischen Flankenwelligkeitskorrekturen auf den Zahnflanken der Zahnradpaarungen. Dieses Verfahren setzt nicht an der Quelle des Übels an, sondern stellt lediglich eine Symptombekämpfung dar.

In einer Werkzeugmaschine bilden insbesondere Verstellvorrichtungen, die zur Lageveränderung der verschiedenen Teile der Werkzeugmaschine zueinander dienen, potentiell schwingungsfähige Systeme. Derartige Verstellvorrichtungen sind üblicherweise als numerisch gesteuerte Achsen (NC-Achsen) realisiert. Eine typische lineare NC-Achse umfasst einen Schlitten, der auf einem oder mehreren linearen Führungselementen an einem Basiskörper geführt ist und dessen Position relativ zum Basiskörper mittels eines NC-gesteuerten Antriebs verstellbar ist. Der Antrieb kann beispielsweise einen Servomotor umfassen, der den Schlitten über einen Kugelgewindetrieb antreibt. Eine rotatorische NC-Achse (Dreh- oder Schwenkachse) umfasst meist eine zu einer Drehung antreibbare Spindel, die direkt oder über ein Getriebe einen Dreh- oder Schwenkkörper bewegt.

WO9409287A1 offenbart eine Linear-Wälzlager-Führung mit den Merkmalen des Oberbegriffs des Anspruchs 1. DE3742965A1 und DE4318428A1 offenbaren jeweils eine lineare Führungsvorrichtung mit verstellbaren Reibungs- und/oder Dämpfungseigenschaften.

### DARSTELLUNG DER ERFINDUNG

Es ist eine Aufgabe der vorliegenden Erfindung, eine motorisch angetriebene Verstellvorrichtung für eine Werkzeugmaschine anzugeben, die derart ausgestaltet ist, dass unerwünschte Schwingungen vermieden oder zumindest effizient gedämpft werden können. Dabei sollen die Massnahmen zur Vermeidung bzw. Dämpfung der Schwingungen schnelle Positionierbewegungen mit Hilfe der Verstellvorrichtung nicht behindern.

Diese Aufgabe wird durch eine Verstellvorrichtung mit den Merkmalen des Anspruchs 1 gelöst. Weitere Ausführungsformen sind in den abhängigen Ansprüchen angegeben.

Es wird also eine Verstellvorrichtung für eine Werkzeugmaschine, insbesondere eine Verzahnmaschine, insbesondere für die Endbearbeitung, offenbart, welche aufweist:
einen Basiskörper;
einen beweglichen Körper, der entlang einer Bewegungsrichtung gegenüber dem Basiskörper bewegbar ist; und
einen (vorzugsweise NC-gesteuerten) Antrieb, um den beweglichen Körper gegenüber dem Basiskörper zu bewegen.

Um die Schwingungsneigung der Verstellvorrichtung zu verringern, umfasst die Verstellvorrichtung einen Hilfskörper, der lösbar am Basiskörper fixierbar ist, so dass der Hilfskörper und der Basiskörper eine starre Verbindung eingehen, und der im gelösten Zustand gemeinsam mit dem beweglichen Körper bewegbar ist. Die Verstellvorrichtung umfasst ausserdem mindestens einen Schwingungsdämpfer, der zwischen dem Hilfskörper und dem beweglichen Körper angeordnet ist.

Dabei sind die Begriffe "Basiskörper" und "beweglicher Körper" so zu verstehen, dass eine Relativbewegung zwischen Basiskörper und beweglichem Körper möglich ist. Der Basiskörper muss selbst nicht notwendigerweise gegenüber einem Maschinenbett stationär sein, sondern kann selbst an einem beweglichen Teil einer Maschine angeordnet sein.

Der Hilfskörper ist also über mindestens einen Schwingungsdämpfer mit dem beweglichen Körper verbunden. Während der Werkstückbearbeitung kann der Hilfskörper am Basiskörper fixiert werden. Dadurch werden Hilfskörper und Basiskörper zu einer starren Einheit, die eine verhältnismässig grosse Masse aufweist. Schwingungen zwischen dem beweglichen Körper und der Einheit aus Hilfskörper und Basiskörper werden mit Hilfe des mindestens einen Schwingungsdämpfers effizient gedämpft. Der Schwingungsdämpfer erzeugt bei einer Relativbewegung zwischen Hilfskörper und beweglichem Körper eine Dämpfungskraft, die der Bewegungsrichtung vorzugsweise entgegengesetzt ist. Dadurch wird die Schwingungsneigung der Verstellvorrichtung insgesamt wirksam verringert.

Wenn die Position des beweglichen Körpers gegenüber dem Basiskörper schnell und/oder über einen grossen Bereich verändert werden soll, kann dagegen die Verbindung zwischen dem Hilfskörper und dem Basiskörper gelöst werden. Nun kann der Hilfskörper gemeinsam mit dem Schwingungsdämpfer den Bewegungen des beweglichen Körpers gegenüber dem Basiskörper folgen, ohne dass einer solchen Bewegung die Dämpfungskraft des Schwingungsdämpfers entgegenwirkt. Der Hilfskörper und der Schwingungsdämpfer können zudem vorteilhaft eine verhältnismässig geringe Masse aufweisen, so dass die Mitbewegung dieser Teile den Antrieb nur unwesentlich zusätzlich belastet. Insgesamt werden auf diese Weise hohe Achslasten bei schnellen Positionierbewegungen vermieden. Zudem wird es dadurch möglich, Schwingungsdämpfer einzusetzen, die nur für kleine Bearbeitungshübe bzw. kleine Amplituden ausgelegt sind. Dadurch kann der Wirkungsgrad des Schwingungsdämpfers gegenüber einem Schwingungsdämpfer, der über den gesamten Bewegungsbereich des beweglichen Körpers wirksam sein muss, deutlich verbessert werden, und der Schwingungsdämpfer kann unabhängig von der angefahrenen Position immer am gleichen Arbeitspunkt arbeiten.

Um Asymmetrien in den Dämpfungseigenschaften zu vermeiden, ist es von Vorteil, wenn die Verstellvorrichtung zwei Schwingungsdämpfer umfasst, die zwischen dem Hilfskörper und dem beweglichen Körper angeordnet sind, wobei die zwei Schwingungsdämpfer bezüglich einer sich senkrecht zur Bewegungsrichtung erstreckenden Normalenebene symmetrisch am beweglichen Körper angeordnet sind. Vorzugsweise handelt es sich dabei um zwei identisch aufgebaute Schwingungsdämpfer.

Bei jedem der Schwingungsdämpfer kann es sich um einen aktiven oder passiven Schwingungsdämpfer handeln. Auch Kombinationen aus aktiven und passiven Schwingungsdämpfern sind denkbar.

Wenn ein passiver Schwingungsdämpfer eingesetzt wird, kann es sich insbesondere um einen fluidischen Dämpfer oder einen Reibungsdämpfer handeln. Beide Arten von Schwingungsdämpfern sind aus dem Stand der Technik an sich wohlbekannt. Reibungsdämpfer entziehen dem System Schwingungsenergie durch Reibvorgänge zwischen zwei sich relativ zueinander bewegenden Festkörpern. Bei fluidischen Dämpfern wird insbesondere zwischen folgenden Unterarten unterschieden: (i) Quetschdämpfer (Squeeze-Film-Dämpfer), bei denen ein Fluid aus einem Spalt zwischen zwei in Normalenrichtung zueinander schwingenden Platten verdrängt wird, (ii) Scherdämpfer, bei denen ein Fluid im Spalt zwischen zwei parallel zueinander schwingenden Platten auf Scherung beansprucht wird; und (iii) Verdrängungsdämpfer (Kolbendämpfer), bei denen ein Fluid durch eine Drossel hindurchgepresst wird. Im Rahmen der vorliegenden Erfindung haben sich insbesondere Verdrängungsdämpfer als besonders geeignet erwiesen, weil diese gute Dämpfungseigenschaften bei einem relativ grossen Verstellweg aufweisen.

Wenn ein aktiver Schwingungsdämpfer eingesetzt wird, umfasst dieser mindestens einen Aktor zur Erzeugung mechanischer Energie durch Umwandlung extern zugeführter Energie. Dabei kann es sich insbesondere um einen elektrodynamischen oder piezoelektrischen Aktor handeln. Der Aktor liegt vorzugsweise im Kraftfluss zwischen dem Hilfskörper und dem beweglichen Körper. Des Weiteren kann der aktive Schwingungsdämpfer mindestens einen Sensor zur Erfassung von Schwingungen des beweglichen Körpers, insbesondere einen Wegsensor, Kraftsensor und/oder Beschleunigungssensor (Inertialsensor), sowie eine Regeleinrichtung aufweisen. Die Regeleinrichtung ist dann dazu ausgebildet, Sensorsignale von dem mindestens einen Sensor zu empfangen und anhand dieser Sensorsignale den mindestens einen Aktor derart anzusteuern, dass der Aktor den Schwingungen entgegenwirkt.

In Fortbildungen kann der mindestens eine Schwingungsdämpfer veränderbare Dämpfungseigenschaften aufweisen. Die Dämpfungseigenschaften des Schwingungsdämpfers können insbesondere mittels einer geeigneten Einstelleinrichtung NC-gesteuert veränderbar sein. Beispielsweise kann bei einem Verdrängungsdämpfer durch einen an sich bekannten Einstellmechanismus die freie Querschnittsfläche der Drossel verändert werden, und/oder es kann mittels eines Druckaktors der Druck eines kompressiblen Fluids im Schwingungsdämpfer verändert werden. Bei einem Scherdämpfer kann beispielsweise die Spaltgrösse verändert werden. Bei einem aktiven Schwingungsdämpfer können beispielsweise Parameter der Regeleinrichtung veränderbar sein, die die Dämpfungseigenschaften des aktiven Schwingungsdämpfers beeinflussen, z.B. Mittenfrequenz und/oder Dämpfung eines Filters in der Regeleinrichtung des aktiven Schwingungsdämpfers. Dadurch können die Dämpfungseigenschaften für die jeweilige Verzahnmaschine und Bearbeitungsaufgabe optimiert werden.

Die Verstellvorrichtung kann eine Einrichtung zur Durchführung einer automatischen Frequenzganganalyse umfassen, die mit dem mindestens einen Schwingungsdämpfer wirkverbunden ist, um dessen Dämpfungseigenschaften anhand eines Ergebnisses der Frequenzganganalyse automatisch zu verändern. Bei einer Frequenzganganalyse werden die Schwingungseigenschaften der mit der Verstellvorrichtung verstellbaren Achse automatisch ermittelt. Auf dieser Basis können die Dämpfungseigenschaften des Schwingungsdämpfers automatisch NC-gesteuert verändert werden. Wenn die Frequenzganganalyse beispielsweise ergibt, dass bei einer bestimmten Frequenz besonders starke Schwingungen auftreten, können im Falle eines aktiven Schwingungsdämpfer ein oder mehrere Parameter der Regeleinrichtung automatisch so eingestellt werden, dass der aktive Schwingungsdämpfer Schwingungen bei dieser Frequenz besonders effektiv dämpft. Eine Einrichtung zur Durchführung einer Frequenzganganalyse ist in modernen Verzahnmaschine oft standardmässig vorhanden.

In vorteilhaften Ausführungsformen ist der Hilfskörper durch eine Klemmeinrichtung am Basiskörper fixierbar. Eine Klemmverbindung lässt sich besonders einfach herstellen und lösen.

Die Verstellvorrichtung kann mindestens einen NC-gesteuerten Aktor aufweisen, um den Hilfskörper am Basiskörper zu fixieren und/oder vom Basiskörper zu lösen. Falls der Hilfskörper durch eine Klemmeinrichtung am Basiskörper fixierbar ist, kann der Aktor also vorzugsweise die Klemmung NC-gesteuert gezielt herstellen und/oder lösen.

Die Verstellvorrichtung kann mindestens einen Sensor aufweisen, um eine oder mehrere der folgenden Grössen zu bestimmen: Weg zwischen Hilfskörper und beweglichem Körper, Kraft zwischen Hilfskörper und beweglichem Körper und Beschleunigung des beweglichen Körpers relativ zum Hilfskörper. Dies ist nicht nur bei einem aktiven Schwingungsdämpfer, wie schon oben erwähnt, sinnvoll, sondern auch bei passiven Schwingungsdämpfern, um z.B. das Schwingungsverhalten des beweglichen Körpers zu charakterisieren.

Die Bewegung des beweglichen Körpers gegenüber dem Basiskörper kann insbesondere linear oder rotatorisch sein.

Wenn die Bewegung linear ist, kann der bewegliche Körper als Verschiebeschlitten ausgebildet sein. Die Verstellvorrichtung kann dann mindestens eine Linearführung umfassen, um den beweglichen Körper am Basiskörper zu führen.

Die Linearführung kann in an sich bekannter Weise als Wälzführung ausgebildet sein. Gerade bei einer Wälzführung ist die vorliegende Erfindung besonders wertvoll, weil eine Wälzführung bauartbedingt in der Regel wesentlich schlechtere Dämpfungseigenschaften aufweist als z.B. eine Gleitführung.

Die Linearführung wird in der Regel ein lineares Führungselement umfassen, das starr oder zumindest axial unbeweglich mit dem Basiskörper verbunden ist, z.B. eine Schiene, wobei der bewegliche Körper an diesem linearen Führungselement geführt ist. In einigen Ausführungsformen ist der Hilfskörper dann ebenfalls an dem linearen Führungselement geführt. In diesem Fall wird also keine separate Linearführung für den Hilfskörper benötigt. Der Hilfskörper kann an dem linearen Führungselement gegenüber dem Basiskörper fixierbar sein, insbesondere durch Klemmung.

In anderen Ausführungsformen kann die Verstellvorrichtung eine Hilfsführung umfassen, die separat von der Linearführung und parallel hierzu ausgebildet ist. Der Hilfskörper ist dann mittels der Hilfsführung am Basiskörper geführt. Die Hilfsführung kann ein lineares Führungselement aufweisen, das starr oder zumindest axial unbeweglich mit dem Basiskörper verbunden ist, z.B. in Form einer Schiene oder einer Stange. Der Hilfskörper kann dann an dem linearen Führungselement der Hilfsführung geführt sein und an dem linearen Führungselement der Hilfsführung fixierbar sein, insbesondere durch Klemmung.

In einigen Ausführungsformen kann der bewegliche Körper als Schwenkkörper ausgebildet sein, wobei dieser Schwenkkörper dann schwenkbar am Basiskörper gelagert ist. Die Verstellvorrichtung kann dann ein ringförmig oder teilringförmig (kreisbogenförmig) verlaufendes Führungselement, z.B. in Form einer Schiene, aufweisen, wobei das Führungselement starr oder zumindest drehfest bezüglich der Schwenkachse mit dem Basiskörper verbunden ist, und der Hilfskörper kann an diesem Führungselement geführt sein. Der Hilfskörper kann durch Klemmung an dem Führungselement und dem Basiskörper fixierbar sein.

Es wird ausserdem eine Werkzeugmaschine offenbart, insbesondere eine Verzahnmaschine, welche mindestens eine Verstellvorrichtung der vorstehend beschriebenen Art aufweist. Insbesondere kann eine Verstellvorrichtung der genannten Art dazu vorgesehen sein, einen Ständer der Verzahnmaschine gegenüber dem Maschinenbett zu bewegen. Der Basiskörper wird in diesem Fall durch das Maschinenbett gebildet, während der bewegliche Körper durch den Ständer gebildet wird. Eine Verstellvorrichtung der genannten Art kann auch dazu vorgesehen sein, einen Vorschubschlitten der Verzahnmaschine gegenüber dem Ständer zu bewegen. In diesem Fall bildet der Ständer den Basiskörper, und der Vorschubschlitten bildet den beweglichen Körper. Auch kann eine Verstellvorrichtung der genannten Art dazu vorgesehen sein, einen Werkzeugkopf der Verzahnmaschine gegenüber einem Vorschubschlitten zu verschwenken, um einen Schrägungswinkel einzustellen. In diesem Fall bildet der Vorschubschlitten den Basiskörper, und der Werkzeugträger bildet den beweglichen Körper. Eine Vielzahl weiterer Einsatzmöglichkeiten der beschriebenen Verstellvorrichtung an einer Werkzeugmaschine ist denkbar.

Ebenfalls offenbart wird ein Verfahren zur Bearbeitung eines Werkstücks, insbesondere eines vorverzahnten Werkstücks, mit einer Werkzeugmaschine der vorgenannten Art. Das Verfahren weist die folgenden Schritte auf:
Lösen des Hilfskörpers vom Basiskörper;
Bewegen des beweglichen Körpers relativ zum Basiskörper mittels des Antriebs, während der Hilfskörper vom Basiskörper gelöst ist, wobei der bewegliche Körper den Hilfskörper mitnimmt;
Fixieren des Hilfskörpers am Basiskörper; und
Bearbeiten des Werkstücks, während der Hilfskörper am Basiskörper fixiert ist.

In einem solchen Verfahren ist es insbesondere denkbar, dass der bewegliche Körper während der Bearbeitung des Werkstücks mittels des Antriebs relativ zum Basiskörper bewegt wird, während der Hilfskörper am Basiskörper fixiert bleibt. Wenn z.B. der bewegliche Körper ein Vorschubschlitten ist, ist es denkbar, während der Bearbeitung des Werkstücks eine Vorschubbewegung durchzuführen, ohne den Hilfskörper dabei vom Basiskörper zu lösen. In diesem Fall ist es nötig, den Schwingungsdämpfer so auszulegen, dass er einen entsprechend grossen Arbeitsbereich (Hub) aufweist.

Wie schon erwähnt, ist es denkbar, im Rahmen eines solchen Verfahrens die Dämpfungseigenschaften des mindestens einen Schwingungsdämpfers zu verstellen, z.B. um diese Dämpfungseigenschaften an eine bestimmte Bearbeitungssituation anzupassen, und es ist denkbar, dies auf der Grundlage einer Frequenzganganalyse vorzunehmen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Verstellvorrichtung gemäss einer ersten Ausführungsform der Erfindung in einer schematischen perspektivischen Ansicht;
- Fig. 2: einen vergrösserten Ausschnitt aus der Fig. 1 im Bereich A1;
- Fig. 3: eine Verstellvorrichtung gemäss einer zweiten Ausführungsform der Erfindung in einer schematischen Draufsicht, teilweise aufgebrochen dargestellt;
- Fig. 4: eine vergrösserte schematische Schnittdarstellung eines Teilbereichs der Verstellvorrichtung der Fig. 3 in der Ebene A2-A2;
- Fig. 5: einen vergrösserten Ausschnitt aus der Fig. 3 im Bereich A3;
- Fig. 6: einen Teil einer Verzahnmaschine gemäss einer dritten Ausführungsform der Erfindung in einer schematischen perspektivischen Ansicht;
- Fig. 7: einen vergrösserten Ausschnitt aus der Fig. 6 im Bereich A4;
- Fig. 8: eine schematische Darstellung der Führung des Hilfskörpers der Fig. 7 auf einem ringförmigen Führungselement mit der dazugehörigen Einrichtung zum Klemmen, teilweise aufgebrochen dargestellt;
- Fig. 9: eine Schnittdarstellung der Anordnung gemäss Fig. 8 in Ebene E1;
- Fig. 10: eine schematische Darstellung einer Werkzeugmaschine.

### BESCHREIBUNG BEVORZUGTER AUSFÜHRUNGSFORMEN

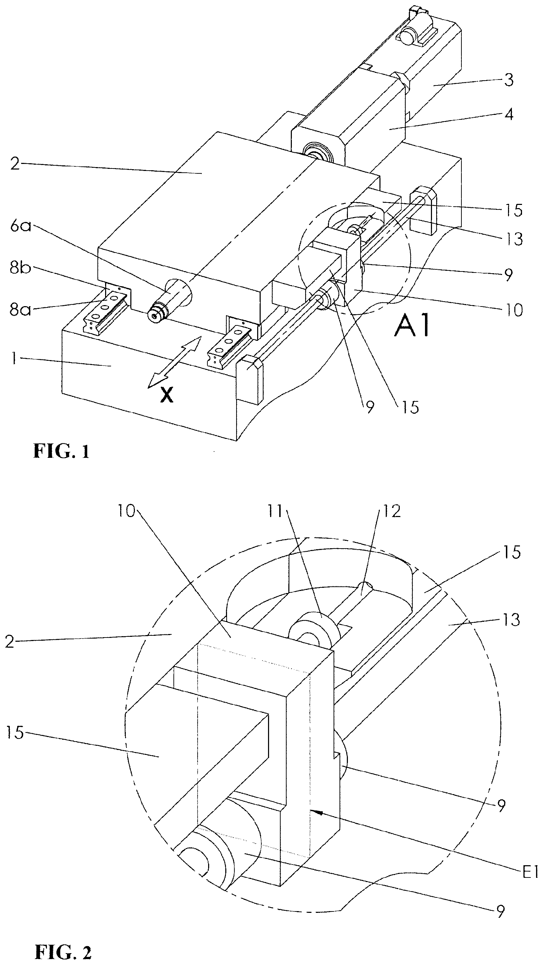

In den Figuren 1 und 2 ist ein erstes Ausführungsbeispiel der Erfindung schematisch illustriert. Auf einem Basiskörper 1 ist ein beweglicher Körper in Form eines Schlittens 2 verschiebbar angeordnet. Dazu sind mit dem Basiskörper 1 zwei parallele Profilschienen 8a starr verbunden. Die Profilschienen erstrecken sich entlang der X-Richtung. Mit dem Schlitten 2 sind vier Führungswagen 8b starr verbunden. Dabei sind jeder Profilschiene 8a jeweils zwei Führungswagen 8b zugeordnet, wobei sich jeweils einer dieser Führungswagen an einem vorderen Ende des Schlittens 2 bezüglich der X-Richtung befindet, und wobei sich der andere Führungswagen an einem hinteren Ende des Schlitten 2 bezüglich der X-Richtung befindet. Die Führungswagen 8b bilden gemeinsam mit den Profilschienen 8a eine lineare Wälzführung. Dazu sind in den Führungswagen 8b in an sich bekannter Weise wälzende Elemente angeordnet.

Am Basiskörper 1 ist ein NC-gesteuerter Servomotor 3 mit zugeordnetem Antriebsgehäuse 4 angeordnet. Der Servomotor 3 treibt eine Gewindespindel 6a eines Kugelgewindetriebs zu einer Drehung an. Die Gewindespindel 6a erstreckt sich durch den Schlitten 2 hindurch und wirkt mit einer nicht dargestellten Spindelmutter zusammen, die im Inneren des Schlittens 2 starr mit diesem verbunden ist. Dadurch bildet der Servomotor 3 gemeinsam mit dem Kugelgewindetrieb einen Antrieb, um den Schlitten 2 gegenüber dem Basiskörper 1 linear zu verschieben.

In einem seitlich neben dem Schlitten 2 gelegenen Bereich ist eine Führungsstange 13 einer Hilfsführung angeordnet, die sich entlang der X-Richtung erstreckt und starr mit dem Basiskörper 1 verbunden ist. Auf der Führungsstange 13 ist ein Hilfskörper 10 geführt. Bezüglich der X-Richtung vor und nach dem Hilfskörper 10 ist auf der Führungsstange 13 jeweils eine NC-gesteuerte Klemmeinrichtung 9 angeordnet. Die Klemmeinrichtungen 9 sind starr mit dem Hilfskörper 2 verbunden. Wenn die Klemmeinrichtungen 9 gelöst sind, lässt sich der Hilfskörper 10 gemeinsam mit den Klemmeinrichtungen 9 entlang der Führungsstange 13 verschieben. Wenn die Klemmeinrichtungen 9 dagegen aktiviert sind, fixieren sie den Hilfskörper 10 auf der Führungsstange 13. Dadurch lässt sich der Hilfskörper 10 NC-gesteuert am Basiskörper 1 fixieren.

Oberhalb der Führungsstange 13 sind am Schlitten 2 zwei Dämpferaufnahmen 15 angeordnet und starr mit dem Schlitten 2 verbunden. Bezüglich der X-Richtung ist zwischen den Dämpferaufnahmen 15 eine Lücke vorhanden. Der Hilfskörper 10 ragt von unten her in diese Lücke hinein.

In jeder der beiden Dämpferaufnahmen 15 ist ein fluidischer Schwingungsdämpfer 11 ausgebildet, welcher in den Figuren 1 und 2 nur sehr schematisch dargestellt ist. Konkret handelt es sich um einen Verdrängungsdämpfer (Kolbendämpfer). Bei einem derartigen Schwingungsdämpfer wird ein Kolben in einem mit Fluid gefüllten Zylinder bewegt. Dabei wird das Fluid durch eine die beiden Seiten des Kolbens verbindende Drossel hindurchgepresst, um eine Dämpfungswirkung zu erzielen. Die Dämpfungseigenschaften werden dabei unter anderem durch die Art des Fluids und durch den freien Querschnitt der Drossel beeinflusst. Wenn es sich bei dem Fluid um ein kompressibles Gas handelt, werden die Dämpfungseigenschaften zusätzlich auch durch den Gasdruck beeinflusst. Derartige Schwingungsdämpfer sind an sich aus dem Stand der Technik bekannt.

Im vorliegenden Ausführungsbeispiel wird der Zylinder des Schwingungsdämpfers durch die Dämpferaufnahme 15 gebildet, welche starr mit dem Schlitten 2 verbunden ist. Der Kolben des Schwingungsdämpfers ist mit dem Hilfskörper 10 verbunden. Auf diese Weise ist der Schwingungsdämpfer 11 dazu ausgebildet, Schwingungen zwischen dem Hilfskörper 10 und dem Schlitten 2 zu dämpfen.

In der Norm VDI 3833, Blatt 1, 2009, wird der Begriff "Dämpfung" wie folgt definiert: "Dämpfung ist die Umwandlung von Bewegungsenergie in Energieformen, die für das betrachtete schwingungsfähige System unwirksam werden [...]. Es handelt sich also um die Wegführung dieser Energie (Energiedissipation) über die betrachteten Grenzen des schwingungsfähigen Systems." Der Begriff "Dämpfung" wird im vorliegenden Dokument im Einklang mit dieser Definition verstanden.

Im vorliegenden Ausführungsbeispiel sind zwei gleichartige Schwingungsdämpfer vorhanden, die bezüglich einer Spiegelebene E1 symmetrisch zueinander am Hilfskörper 10 angeordnet sind. Die Spiegelebene verläuft senkrecht zur X-Richtung. Auf diese Weise ist sichergestellt, dass unabhängig davon, ob sich der Schlitten 2 relativ zum Hilfskörper 10 entlang der positiven oder negativen X-Richtung bewegt, immer die gleiche Dämpfungswirkung eintritt.

Mit Hilfe der Klemmeinrichtungen 9 kann der Hilfskörper 10 an der Führungsstange 13 und somit am Basiskörper 1 fixiert werden. Die Schwingungsdämpfer 11 wirken somit effektiv zwischen dem Schlitten 2 und dem Basiskörper 1. Wenn nun Schwingungen zwischen dem Schlitten 2 und dem Basiskörper 1 auftreten, werden diese durch die Schwingungsdämpfer 11 wirksam gedämpft.

Wenn andererseits der Schlitten 2 schnell in eine andere Position verfahren werden soll, können die Klemmeinrichtungen 9 gelöst werden. Nun ist es möglich, den Schlitten 2 mit Hilfe des Motors 3 in eine andere Position zu verfahren, wobei der Schlitten 2 über die Schwingungsdämpfer 11 den Hilfskörper 10 und die Klemmeinrichtungen 9 bei dieser Verfahrbewegung mitnimmt. Da die Klemmeinrichtungen 9, der Hilfskörper 10 und die Schwingungsdämpfer 11 gemeinsam eine erheblich geringere Masse aufweisen als der Schlitten 2, wird hierbei der Antrieb nicht in nennenswertem Umfang zusätzlich belastet.

In der Praxis wird sich auf dem Schlitten 2 häufig ein weiteres Bauteil einer Werkzeugmaschine befinden. Die Klemmeinrichtungen 9 werden dann vor allem in denjenigen Betriebsphasen aktiviert, in denen ein Werkzeug 22 der Werkzeugmaschine 25 in Bearbeitungseingriff mit einem Werkstück 23 steht. Aufgrund der Klemmung wirken die Schwingungsdämpfer 11 störenden Schwingungen zwischen Schlitten 2 und Basiskörper 1 während der Bearbeitung wirksam entgegen. Wenn eine andere Relativposition zwischen Werkzeug und Werkstück eingenommen werden soll, kann der Schlitten 2 in eine andere Position verfahren werden, während die Klemmeinrichtungen 9 gelöst sind. Sobald die Bearbeitung in der neuen Relativposition fortgesetzt wird, werden die Klemmeinrichtungen 9 wieder aktiviert. Dadurch arbeiten die Schwingungsdämpfer 11 unabhängig von der Position des Schlittens 2 immer im gleichen Betriebspunkt, und die Schwingungsdämpfer 11 brauchen nicht einen derartig langen Hub aufzuweisen, dass sie den gesamten Bewegungsbereich des Schlittens 2 gegenüber dem Basiskörper 1 abdecken.

Mithilfe eines Anschlusses 12 (siehe Fig. 2) kann der Druck des Fluids im Schwingungsdämpfer 11 verändert werden. Dadurch können die Dämpfungseigenschaften des Schwingungsdämpfers 11 von aussen verändert werden. Dies ermöglicht es, die Dämpfungseigenschaften gezielt an eine konkrete Betriebssituation anzupassen. Durch Bereitstellung eines NC-gesteuerten Druckaktors kann eine solche Anpassung sogar im laufenden Betrieb erfolgen. Statt durch eine Änderung des Fluiddrucks kann eine Anpassung der Dämpfungseigenschaften auch auf andere Weise erfolgen, z.B. durch eine Veränderung des freien Querschnitts der Drossel im Kolben des Schwingungsdämpfers 11.

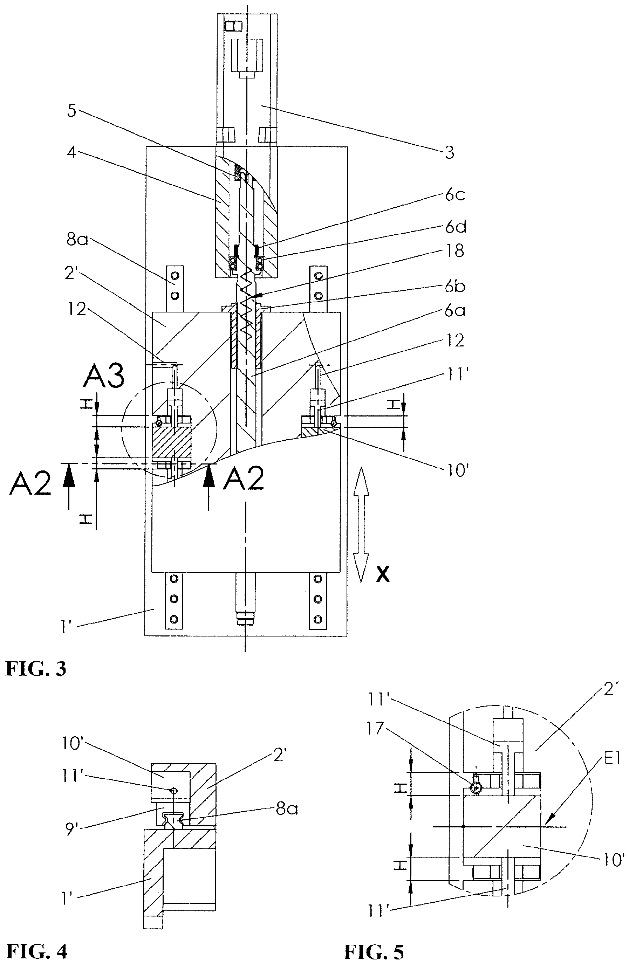

Eine zweite Ausführungsform einer erfindungsgemässen Verstellvorrichtung ist in den Figuren 3 bis 5 illustriert. Gleiche oder gleichwirkende Teile sind mit den gleichen Bezugszeichen wie in den Figuren 1 und 2 bezeichnet.

Wiederum ist ein Schlitten 2' mit Hilfe zweier paralleler Profilschienen 8a auf einem Basiskörper 1' linear geführt. Dazu sind an den Ecken des Schlittens 2' wiederum vier Führungswagen 8b angeordnet, wie dies im Zusammenhang mit der Figur 1 beschrieben wurde, wobei diese Führungswagen 8b in den Figuren 3 bis 5 nicht sichtbar sind.

Wiederum ist der Schlitten 2' mit Hilfe eines Servomotors 3 entlang der X-Richtung auf den Profilschienen 8a verschiebbar. Zur Kraftübertragung dient wiederum ein Kugelgewindetrieb mit Gewindespindel 6a. Im Gegensatz zur Fig. 1 sind in der Fig. 3 auch die schon erwähnte Spindelmutter 6b, die über ein Axiallager 6d drehbar im Antriebsgehäuse 4 angeordnete Lagermutter 6c des Kugelgewindetriebs sowie eine Kupplung 5 zwischen Servomotor 3 und Gewindespindel 6a dargestellt.

Der Schlitten 2' und der Basiskörper 1' bilden wiederum ein schwingungsfähiges System entlang der X-Richtung, was in der Figur 3 durch eine schematisch dargestellte Feder 18 angedeutet ist. Um Schwingungen entlang der X-Richtung zu dämpfen, ist wiederum ein ähnlicher Mechanismus wie in der Ausführungsform der Figuren 1 und 2 vorgesehen. Im Gegensatz zu dieser Ausführungsform sind jedoch zwei Hilfskörper 10' vorhanden, die beidseitig am Schlitten 2' angeordnet sind, und diese Hilfskörper sind durch Klemmeinrichtungen 9' an denselben Profilschienen 8a fixierbar, auf denen auch der Schlitten 2' am Basiskörper 1' geführt ist.

Der Schlitten 2' weist dazu an seinen beiden lateralen Seiten jeweils eine Ausnehmung auf, in der sich jeweils einer der Hilfskörper 10' befindet. Jeder Hilfskörper 10' ist wiederum über zwei symmetrisch angeordnete Schwingungsdämpfer 11' mit dem Schlitten 2' verbunden. Unterhalb jedes Hilfskörpers 10' befindet sich eine Klemmeinrichtung 9', die starr mit dem jeweiligen Hilfskörper 10' verbunden ist. Die Klemmeinrichtung 9' bildet selbst einen Schlitten, der sich gleitend auf der jeweiligen Profilschiene 8a abstützt, solange die Klemmeinrichtung nicht aktiviert ist. Wenn die Klemmeinrichtung 9' aktiviert wird, stellt sie eine Klemmverbindung der Klemmeinrichtung 9' mit der Profilschiene 8a her und fixiert dadurch den Hilfskörper 10' am Basiskörper 1'.

Indem beidseitig des Schlittens 2' klemmbare Hilfskörper 10' mit jeweils zwei symmetrisch angeordneten Schwingungsdämpfern 11' angeordnet sind, kann gegenüber einer einseitigen Anordnung eine verbesserte Dämpfungswirkung erzielt werden. Zudem baut diese Ausführung kompakter.

Wie in der Figur 5 illustriert ist, kann der axiale Spalt zwischen dem Hilfskörper 10' und dem Schlitten 2' dazu benutzt werden, sehr präzise den Hub H zwischen dem Schlitten 2' und dem geklemmten Hilfskörper 10' zu vermessen. Dazu kann in diesem Spalt ein geeigneter Wegsensor angeordnet sein. Statt eines Wegsensors oder zusätzlich dazu können zwischen Schlitten 2' und Hilfskörper 10' z.B. auch ein Beschleunigungssensor oder ein Kraftsensor vorgesehen werden. Dadurch können die Relativbewegungen zwischen dem Schlitten 2' und dem geklemmten Hilfskörper 10' sehr präzise charakterisiert werden, z.B. mit dem Ziel, die Dämpfungseinstellungen der einstellbaren Schwingungsdämpfer 11' zu optimieren. In der Figur 5 werden die verschiedenen Sensortypen als Sensor 17 schematisch dargestellt.

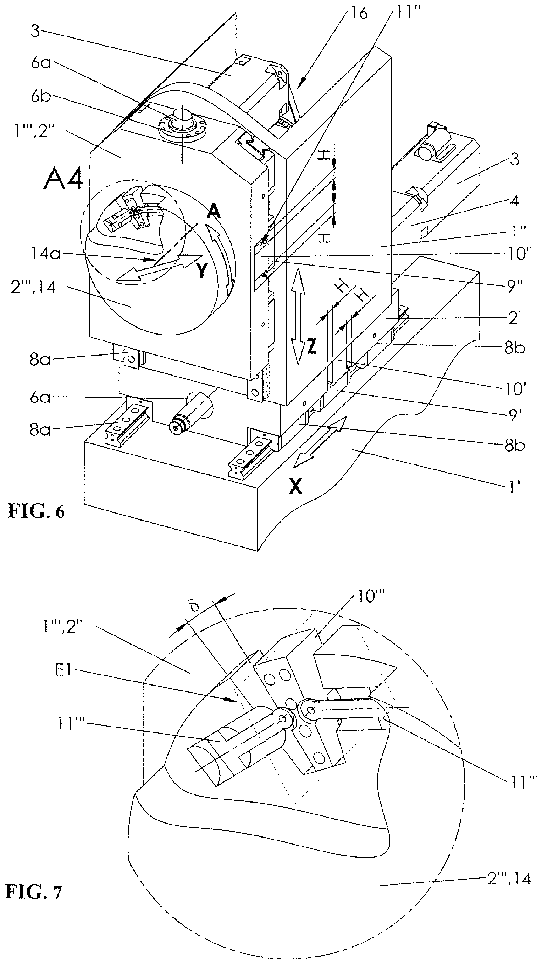

In den Figuren 6 und 7 ist schematisch ein Teil einer Verzahnmaschine 26 mit mehreren Verstellvorrichtungen illustriert, wobei alle dargestellten Verstellvorrichtungen mit Hilfskörpern und Schwingungsdämpfern versehen sind.

Die erste der dargestellten Verstellvorrichtungen entspricht in ihrem Aufbau der Verstellvorrichtung der Figuren 3 bis 5. Der Basiskörper 1' dieser Verstellvorrichtung wird durch das Maschinenbett gebildet, während der bewegliche Körper dieser Verstellvorrichtung durch einen Schlitten 2' gebildet wird, auf dem ein Ständer 1" eines Werkzeugträgers montiert ist. Diese Verstellvorrichtung dient dazu, den Ständer 1" mit Hilfe des Schlittens 2' entlang der X-Achse (radiale Zustellachse) gegenüber dem Basiskörper (hier dem Maschinenbett) 1' zu verschieben. In der Fig. 6 erkennt man insbesondere die Führungswagen 8b, die in den Figuren 3 bis 5 nicht sichtbar sind, sowie die Anordnung der jeweiligen Klemmeinrichtung 9' unterhalb des damit verbundenen Hilfskörpers 10'.

Eine zweite Verstellvorrichtung dient dazu, einen Z-Schlitten 2" entlang einer vertikalen Zustellachse Z gegenüber dem Ständer 1" zu verschieben, wobei auf dem Z-Schlitten 2" eine Schwenkeinrichtung für einen Werkzeugkopf montiert ist. Auch diese Verstellvorrichtung ist gemäss den Prinzipien der Ausführungsform der Figuren 3 bis 5 ausgebildet. Als Basiskörper dient hier also der Ständer 1", während als beweglicher Körper der Z-Schlitten 2" dient. Dem Z-Schlitten 2" sind Hilfskörper 10" mit Klemmeinrichtungen 9" zugeordnet. Die entsprechenden Schwingungsdämpfer 11" sind in der Figur 6 nicht sichtbar, aber durch einen Pfeil angedeutet.

Eine dritte Verstellvorrichtung dient dazu, einen Schwenkkörper 14 um eine Schwenkachse 14a entlang einer Schwenkrichtung A gegenüber dem Z-Schlitten 2" zu verschwenken. Als Basiskörper 1‴ dient hier also der Z-Schlitten 2", während als beweglicher Körper 2‴ der Schwenkkörper 14 dient. Der Schwenkkörper 14 ist dazu drehbar am Z-Schlitten 2" (in seiner Funktion als Basiskörper 1‴) gelagert. Der Schwenkantrieb zur Erzeugung von Schwenkbewegungen des Schwenkkörpers 14 (beweglichen Körpers 2‴) gegenüber dem Z-Schlitten 2" (Basiskörper 1‴) ist in der Figur 6 nicht sichtbar. Dem Schwenkkörper 14 (beweglichen Körper 2‴) ist ein Hilfskörper 10‴ zugeordnet, der am Z-Schlitten 2" (Basiskörper 1‴) durch Klemmung fixierbar ist und über zwei symmetrisch angeordnete Schwingungsdämpfer 11‴ mit dem Schwenkkörper 14 (beweglichen Körper 2‴) verbunden ist. Die Kolben der Schwingungsdämpfer 11‴ sind dazu über Drehgelenke mit dem Hilfskörper 10‴ verbunden. Dadurch kann eine wirksame Schwingungsdämpfung auch entlang der Schwenkrichtung A bezüglich dem Schwenkwinkel δ erreicht werden.

Der Schwenkkörper 14 wird in der Praxis meist eine nicht dargestellte weitere Verstellvorrichtung mit einem Y-Schlitten tragen, um die sogenannte Shiftachse Y zu realisieren. Auf dem Y-Schlitten befindet sich dann der Werkzeugkopf mit der Werkzeugspindel. Auch diese Verstellvorrichtung kann analog zu den Verstellvorrichtungen entlang der X- und Z-Achse aufgebaut sein.

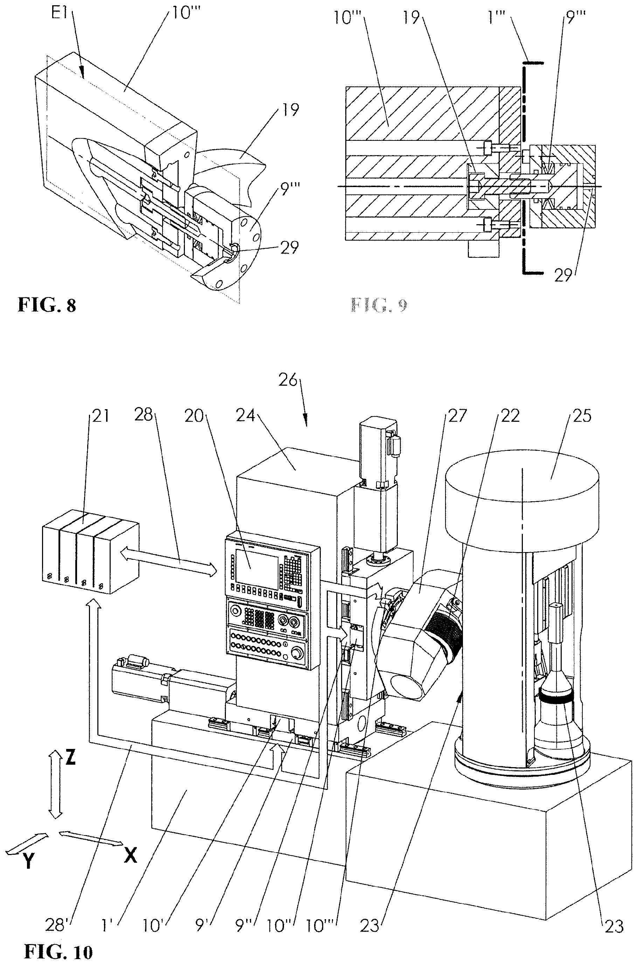

In den Figuren 8 und 9 ist eine mögliche Ausführungsform der Führung und Klemmung des Hilfskörpers 10'", der dem Schwenkkörper 14 (beweglichen Körper 2‴) zugeordnet ist, am Z-Schlitten 2" (Basiskörper 1‴) illustriert. Im Basiskörper 1‴ sind dazu mehrere hydraulisch betätigte Klemmeinrichtungen 9‴ untergebracht. Eine ringförmige Führungsschiene 19 ist fest mit den axial beweglichen Kolben dieser Klemmeinrichtungen 9‴ verbunden. Dadurch ist die Führungsschiene 19 gegenüber dem Basiskörper 1‴ zwar drehfest um die Schwenkachse 14a, lässt sich aber mittels der Klemmeinrichtungen 9‴ um einen kleinen Weg axial auf den Basiskörper 1‴ zu und von ihm weg bewegen. Der Hilfskörper 10‴ läuft als Schlitten auf dieser Führungsschiene 19. Wenn die Führungsschiene 19 axial auf den Basiskörper 1‴ zu bewegt wird, klemmt sie den Hilfskörper 10‴ axial zwischen der Führungsschiene 19 und der Oberfläche des Basiskörpers 1‴ (in Fig. 9 nur schematisch dargestellt). Wenn umgekehrt die Führungsschiene 19 wieder vom Basiskörper 1‴ weg bewegt wird, wird diese Klemmung wieder gelöst.

Die axiale Bewegung der Führungsschiene 19 erfolgt hydraulisch mittels der Klemmeinrichtungen 9'". Die Klemmeinrichtungen sind hierzu als hydraulisch betätigte Aktoren ausgebildet. Wenn an einem Fluidanschluss 29 der Klemmeinrichtung 9‴ ein hoher Hydraulikdruck angelegt wird, löst die Klemmeinrichtung 9‴ die Klemmung des Hilfskörpers 10‴ zwischen der ringförmigen Führungsschiene 19 und dem Basiskörper 1‴, und der Hilfskörper 10'" kann sich nun ungehindert auf einer Kreisbahn entlang der Führungsschiene 19 bewegen. Somit kann der Schwenkkörper 14 (bewegliche Körper 2‴) in den gewünschten Schwenkwinkel verschwenkt werden, während er den Hilfskörper 10‴ ungehindert mitnimmt. Bei Deaktivierung des Hydraulikdruckes bewegen die Klemmeinrichtungen 9"' mittels Federkraft die Führungsschiene 19 wieder in Richtung des Basiskörpers 1‴ und klemmen dadurch erneut den Hilfsschlitten 10‴ am Basiskörper 1‴. Dadurch wird in beliebiger Winkelstellung eine starre Verbindung zwischen dem Hilfskörper 10‴und dem Basiskörper 1‴ hergestellt.

Anstelle der in den Figuren 8 und 9 skizzierten Anordnung sind auch andere Anordnungen zur Führung eines Hilfskörpers 10‴ an einem Basiskörper 1‴ entlang einer Kreisbahn und zu seiner Fixierung am Basiskörper 1‴ denkbar. So kann die Führung des Hilfskörpers 10‴ z.B. auch am Aussendurchmesser des beweglichen Körpers 2‴ (Schwenkkörpers 14) erfolgen. Der Hilfskörper 10‴ kann an einer Führungsschiene geführt sein, die starr mit dem Basiskörper 1‴ verbunden ist. Die Klemmeinrichtungen können dann am Hilfskörper 10‴ selbst angeordnet sein, so dass sie sich im gelösten Zustand mit dem Hilfskörper mitbewegen. Dazu können insbesondere kommerziell erhältliche, rotatorische Klemmsysteme zum Einsatz kommen.

Die Figur 10 zeigt schematisch eine vollständige Verzahnmaschine 26 zur Feinbearbeitung vorverzahnter Werkstücke mittels Wälzschleifen. Auf einem Werkzeugträger 24 ist ein Werkzeugkopf (Schleifkopf) 27 mit Wälzschleifwerkzeug 22 angeordnet. Auf einem Werkstückträger 25, der als Drehturm ausgebildet ist, sind zwei Werkstückspindeln mit vorverzahnten Werkstücken 23 angeordnet. Mittels des Drehturms können die Werkstückspindeln zwischen einer Bearbeitungsposition und einer Werkstückwechselposition verschwenkt werden. Die Aktoren und Sensoren in den beschriebenen linearen und schwenkbaren Verstellvorrichtungen sind über Druckleitungen, Signal- und Stromleitungen mit NC-Modulen 21 einer NC-Steuerung verbunden. Mittels einer Bedientafel 20 der NC- Steuerung können die NC-Module 21 bedient werden. Den Datenfluss hierzu zeigen schematisch die Pfeile 28 und 28' an. Ein Teil der NC-Module kann insbesondere dazu ausgebildet sein, die Klemmeinrichtungen (beispielhaft dargestellt sind Klemmeinrichtungen 9', 9") für die verschiedenen Hilfskörper 10', 10", 10‴ anzusteuern. Ein anderer Teil der NC-Module 21 kann zudem dazu ausgebildet sein, einen oder mehrere aktive Schwingungsdämpfer anzusteuern und/oder die Dämpfungseigenschaften der aktiven oder passiven Schwingungsdämpfer zu verändern.

In allen dargestellten Ausführungsformen erzeugen die Schwingungsdämpfer vorzugsweise Dämpfungskräfte im Frequenzbereich von 20 Hz bis ca. 5 kHz , damit störende Schwingungen im gesamten relevanten Frequenzbereich unterdrückt bzw. vermindert werden.

Für die Auslegung des Hubs der verwendeten Schwingungsdämpfer können folgende Überlegungen angestellt werden. Für die radiale Zustellachse X ist in der Praxis nur ein sehr kleiner Hub von z.B. 10 bis 20 mm erforderlich, da während der Bearbeitung eines Werkstücks bei geklemmtem Hilfskörper 10' in der Regel nur sehr kleine Bewegungen entlang dieser Achse erfolgen, um z.B. ballige oder keglige Formen am Zahnrad zu erzeugen. Für die vertikale Zustellachse Z sollte dagegen der Hub der Schwingungsdämpfer genügend gross gewählt werden, dass eine vollständige Zahnradbreite bearbeitet werden kann, ohne die Klemmung des Hilfskörpers 10" zu lösen. In der Praxis bedeutet dies, dass ein Hub von bis zu 100 mm oder sogar mehr erforderlich sein kann. Auch für die Shiftachse Y kann ein ähnlich grosser Hub erforderlich sein.

Die Klemmeinrichtungen 9" der Vertikalachse Z können noch die zusätzliche Funktion erfüllen, den Z-Schlitten 2" im Störungsfall gegen einen Absturz zu sichern. Dazu können die Klemmeinrichtungen so ausgebildet sein, dass sie eine Klemmwirkung hervorbringen, wenn sie stromlos (im Fall einer elektrisch angesteuerten Klemmeinrichtung) bzw. drucklos (im Fall einer hydraulisch angesteuerten Klemmeinrichtung) sind.

Die vorstehend beschriebenen Verstellvorrichtungen können in neue, aber auch vorhandene Maschinen eingebaut werden. Beim Einbau in alle geometriebestimmenden Linearachsen X, Y und Z kann eine globale Dämpfungsstruktur in der Werkzeugmaschine realisiert werden. Diese ist sehr gut geeignet, "vor Ort" die nicht definierbaren "vagabundierenden" Schwingungsenergien wirkungsvoll zu dämpfen. Damit wird ihre störende Einwirkung auf die Geometrie des Zahnrades verhindert bzw. minimiert, und das Auftreten von "Geisterfrequenzen" kann weitgehend vermieden werden.

Die erfindungsgemässen Verstellvorrichtungen sind in allen Arten von Verzahnmaschinen, die eine Endbearbeitung an den Zahnflanken eines Zahnrades ausführen, einsetzbar, insbesondere Verzahnmaschinen zum Wälzschleifen, Teilwälzschleifen, Profilschleifen, Hartwälzfräsen, Hartwälzschälen, Honen, usw.

### BEZUGSZEICHENLISTE

- 1: Basiskörper
- 1': Basiskörper (Maschinenbett)
- 1": Basiskörper (Ständer)
- 1‴: Basiskörper (Schlitten)
- 2, 2',2": Beweglicher Körper (Schlitten)
- 2‴: Beweglicher Körper (Schwenkkörper)
- 3: Servomotor
- 4: Antriebsgehäuse
- 5: Kupplung
- 6a: Gewindespindel
- 6b: Spindelmutter
- 6c: Lagermutter
- 6d: Axiallager
- 8a: Profilschiene
- 8b: Führungswagen
- 9, 9', 9", 9‴: Klemmeinrichtung
- 10, 10', 10",10‴: Hilfskörper
- 11, 11', 11", 11‴: Schwingungsdämpfer
- 12: Anschluss
- 13: Hilfsführung
- 14: Schwenkkörper
- 14a: Schwenkachse
- 15: Dämpferaufnahme
- 16: Getriebe
- 17: Sensor
- 18: Feder
- 19: Führungsschiene, ringförmig
- 20: Bedientafel einer NC-Steuerung
- 21: NC-Modul
- 22: Werkzeug (Schleifschnecke)
- 23: Werkstück (Zahnrad)
- 24: Werkzeugträger
- 25: Werkstückträger
- 26: Verzahnmaschine
- 27: Werkzeugkopf (Schleifkopf)
- 28, 28': Datenübertragung
- 29: Fluidanschluss

- A: Schwenkrichtung
- A1 bis A4: Detail- und Schnittansichten
- E1: Spiegelebene
- H: Hub
- X: Verschieberichtung
- Y: Verschieberichtung
- Z: Verschieberichtung
- δ: Schwenkwinkel

## Patentansprüche

1. Verstellvorrichtung für eine Werkzeugmaschine, insbesondere eine Verzahnmaschine (26), aufweisend:
einen Basiskörper (1; 1'; 1"; 1‴);
einen beweglichen Körper (2; 2'; 2"; 2‴), der entlang einer Bewegungsrichtung (X; Y; Z; A) gegenüber dem Basiskörper (1; 1'; 1";
1‴) bewegbar ist; und
einen Antrieb (3), um den beweglichen Körper (2; 2'; 2"; 2‴) gegenüber dem Basiskörper (1; 1`; 1"; 1‴) zu bewegen;
einen Hilfskörper (10; 10'; 10"; 10‴), der gemeinsam mit dem beweglichen Körper (2; 2'; 2"; 2‴) gegenüber dem Basiskörper (1; 1'; 1"; 1‴) bewegbar ist; und
mindestens einen Schwingungsdämpfer (11; 11'; 11"; 11‴), der zwischen dem Hilfskörper (10; 10'; 10"; 10‴) und dem beweglichen Körper (2; 2'; 2"; 2‴) angeordnet ist, insbesondere mindestens einen aktiven oder passiven Schwingungsdämpfer,
**dadurch gekennzeichnet, dass** der Hilfskörper lösbar am Basiskörper (1; 1'; 1"; 1‴) fixierbar und im gelösten Zustand gemeinsam mit dem beweglichen Körper (2; 2'; 2"; 2‴) gegenüber dem Basiskörper (1; 1'; 1"; 1‴) bewegbar ist.

2. Verstellvorrichtung nach Anspruch 1, wobei die Verstellvorrichtung zwei Schwingungsdämpfer (11; 11'; 11"; 11‴) umfasst, die zwischen dem Hilfskörper (10; 10'; 10"; 10‴) und dem beweglichen Körper (2; 2'; 2"; 14) angeordnet sind, wobei die zwei Schwingungsdämpfer (11; 11'; 11") bezüglich einer sich senkrecht zur Bewegungsrichtung (X; Y; Z; A) erstreckenden Normalenebene (E1) symmetrisch am beweglichen Körper (2; 2'; 2"; 2‴) angeordnet sind.

3. Verstellvorrichtung nach einem der vorhergehenden Ansprüche,
wobei der mindestens eine Schwingungsdämpfer (11; 11'; 11"; 11‴) veränderbare Dämpfungseigenschaften aufweist, und
wobei die Verstellvorrichtung optional eine Einrichtung zur Durchführung einer Frequenzganganalyse umfasst, die mit dem mindestens einen Schwingungsdämpfer (11; 11'; 11"; 11‴) wirkverbunden ist, um dessen Dämpfungseigenschaften anhand eines Ergebnisses der Frequenzganganalyse automatisch zu verändern.

4. Verstellvorrichtung nach einem der vorhergehenden Ansprüche, wobei der Hilfskörper (10; 10'; 10"; 10‴) durch eine Klemmeinrichtung (9; 9`; 9"; 9‴) am Basiskörper (1; 1'; 1"; 1‴) fixierbar ist.

5. Verstellvorrichtung nach einem der vorhergehenden Ansprüche, wobei die Verstellvorrichtung mindestens einen NC-gesteuerten Aktor aufweist, um den Hilfskörper (10; 10'; 10"; 10‴) am Basiskörper (1; 1'; 1"; 1‴) zu fixieren und/oder vom Basiskörper (1; 1'; 1"; 1‴) zu lösen.

6. Verstellvorrichtung nach einem der vorhergehenden Ansprüche, wobei die Verstellvorrichtung mindestens einen Sensor (17) aufweist, um eine oder mehrere der folgenden Grössen zu bestimmen: Weg zwischen Hilfskörper (10; 10'; 10"; 10‴) und beweglichem Körper (2; 2'; 2"; 2‴); Kraft zwischen Hilfskörper (10; 10'; 10"; 10‴) und beweglichem Körper (2; 2'; 2"; 2‴) und Beschleunigung des beweglichen Körpers (2; 2'; 2"; 2‴) relativ zum Hilfskörper (10; 10'; 10"; 10‴).

7. Verstellvorrichtung nach einem der vorhergehenden Ansprüche, wobei der bewegliche Körper (2; 2'; 2") als Schlitten ausgebildet ist, wobei die Verstellvorrichtung eine Linearführung (8a, 8b), vorzugsweise in Form einer Wälzführung, umfasst, und wobei der bewegliche Körper (2; 2'; 2") mittels der Linearführung (8a, 8b) am Basiskörper (1; 1'; 1") geführt ist.

8. Verstellvorrichtung nach Anspruch 7, wobei die Linearführung (8a, 8b) ein lineares Führungselement (8a), insbesondere in Form einer Schiene, umfasst, wobei das lineare Führungselement (8a) axial unbeweglich mit dem Basiskörper (1'; 1") verbunden ist, wobei der bewegliche Körper (2'; 2") an dem linearen Führungselement (8a) der Linearführung geführt ist, und wobei der Hilfskörper (10'; 10") ebenfalls an dem linearen Führungselement (8a) der Linearführung geführt ist, wobei der Hilfskörper (10'; 10") vorzugsweise durch eine Klemmeinrichtung (9'; 9") an dem linearen Führungselement (8a) der Linearführung fixierbar ist.

9. Verstellvorrichtung nach Anspruch 7,
wobei die Verstellvorrichtung eine Hilfsführung (13) umfasst, die separat von der Linearführung (8a, 8b) ausgebildet ist, und wobei der Hilfskörper (9) mittels der Hilfsführung (13) am Basiskörper (1) geführt ist,
wobei die Hilfsführung (13) vorzugsweise ein lineares Führungselement, insbesondere in Form einer Schiene oder Stange, aufweist, wobei das lineare Führungselement der Hilfsführung axial unbeweglich mit dem Basiskörper (1) verbunden ist, wobei der Hilfskörper (9) an dem linearen Führungselement der Hilfsführung (13) geführt ist, und wobei der Hilfskörper (9) an dem linearen Führungselement der Hilfsführung (13) durch Klemmung fixierbar ist.

10. Verstellvorrichtung nach einem der Ansprüche 1 bis 6,
wobei der bewegliche Körper (2‴) als Schwenkkörper (14) ausgebildet ist, welcher um eine Schwenkachse (14a) schwenkbar am Basiskörper (1‴) gelagert ist,
wobei die Verstellvorrichtung vorzugsweise ein mindestens teilringförmig verlaufendes Führungselement (19) aufweist, das bezüglich der Schwenkachse (14a) drehfest mit dem Basiskörper (1‴) verbunden ist, wobei der Hilfskörper (10‴) an dem Führungselement (19) geführt ist, und
wobei der Hilfskörper (10‴) an dem mindestens teilringförmig verlaufenden Führungselement (19) vorzugsweise durch eine Klemmeinrichtung (9‴) fixierbar ist.

11. Werkzeugmaschine, insbesondere Verzahnmaschine (26), aufweisend eine Verstellvorrichtung nach einem der vorhergehenden Ansprüche.

12. Verfahren zur Bearbeitung eines Werkstücks (23) mit einer Werkzeugmaschine nach Anspruch 11 , aufweisend die folgenden Schritte:
1‴), Lösen des Hilfskörpers (10; 10'; 10"; 10‴) vom Basiskörper (1; 1'; 1";
Bewegen des beweglichen Körpers (2; 2'; 2"; 2‴) relativ zum Basiskörper (1; 1'; 1"; 1‴) mittels des Antriebs (3), während der Hilfskörper (10; 10'; 10"; 10‴) vom Basiskörper (1; 1'; 1"; 1‴) gelöst ist;
Fixieren des Hilfskörpers (10; 10'; 10"; 10‴) am Basiskörper (1; 1'; 1"; 1‴); und
Bearbeiten des Werkstücks (23), während der Hilfskörper (10; 10'; 10"; 10‴) am Basiskörper fixiert ist (1; 1'; 1"; 1‴).

13. Verfahren nach Anspruch 12, wobei der bewegliche Körper (2; 2'; 2"; 2‴) während des Bearbeitens des Werkstücks (23) mittels des Antriebs (3) relativ zum Basiskörper (1; 1'; 1"; 1‴) bewegt wird, während der Hilfskörper (2; 2'; 2"; 2‴) am Basiskörper (1; 1'; 1"; 1‴) fixiert bleibt.

14. Verfahren nach Anspruch 12 oder 13, aufweisend:
Verstellen der Dämpfungseigenschaften des mindestens einen Schwingungsdämpfers (11; 11'; 11"; 11‴).

15. Verfahren nach Anspruch 14, aufweisend:
Durchführen einer Frequenzganganalyse; und
automatisches Verändern der Dämpfungseigenschaften des mindestens eines Schwingungsdämpfers (11; 11'; 11"; 11‴) anhand eines Ergebnisses der Frequenzganganalyse.

## Claims

1. An adjusting device for a machine tool, in particular a gear cutting machine (26), comprising:
a base body (1; 1'; 1"; 1‴);
a movable body (2; 2'; 2"; 2‴) which is movable along a direction of movement (X; Y; Z; A) relative to the base body (1; 1'; 1"; 1‴); and
a drive (3) to move the movable body (2; 2'; 2"; 2‴) relative to the base body (1; 1'; 1"; 1‴);
an auxiliary body (10; 10'; 10"; 10‴) movable together with the movable body (2; 2'; 2"; 2‴) with respect to the base body (1; 1'; 1"; 1‴); and
at least one vibration damper (11; 11'; 11"; 11‴) which is arranged between the auxiliary body (10; 10'; 10"; 10‴) and the movable body (2; 2'; 2"; 2‴), in particular at least one active or passive vibration damper,
**characterized in that** the auxiliary body is releasably fixable to the base body (1; 1'; 1"; 1‴) and, in the detached state, is movable together with the movable body (2; 2'; 2"; 2‴) relative to the base body (1; 1'; 1"; 1‴).

2. The adjusting device according to claim 1, wherein the adjusting device comprises
two vibration dampers (11; 11'; 11"; 11‴) arranged between the auxiliary body (10; 10'; 10"; 10‴) and the movable body (2; 2'; 2"; 14), the two vibration dampers (11; 11'; 11") being arranged symmetrically on the movable body (2; 2'; 2"; 2‴) with respect to a normal plane (E1) extending perpendicularly to the direction of movement (X; Y; Z; A).

3. The adjusting device according to any of the preceding claims,
wherein the at least one vibration damper (11; 11'; 11"; 11‴) has modifiable damping characteristics, and
wherein the adjusting device optionally comprises a device for performing a frequency response analysis, which is operatively connected to the at least one vibration damper (11; 11'; 11"; 11‴) in order to automatically modify the damping its characteristics on the basis of a result of the frequency response analysis.

4. The adjusting device according to any one of the preceding claims, wherein the auxiliary body (10; 10'; 10"; 10‴) is fixable to the base body (1; 1'; 1"; 1‴) by a clamping device (9; 9'; 9"; 9‴).

5. The adjusting device according to any one of the preceding claims, wherein the adjusting device comprises at least one NC-controlled actuator in order to fix the auxiliary body (10; 10'; 10"; 10‴) to the base body (1; 1'; 1"; 1‴) and/or to release it from the base body (1; 1'; 1"; 1‴).

6. The adjusting device according to any of the preceding claims, wherein the adjusting device comprises at least one sensor (17) to determine one or more of the following quantities: a displacement between the auxiliary body (10; 10'; 10"; 10‴) and the movable body (2; 2'; 2"; 2‴); a force between the auxiliary body (10; 10'; 10"; 10‴) and the movable body (2; 2'; 2"; 2‴) and an acceleration of the movable body (2; 2'; 2"; 2‴) relative to the auxiliary body (10; 10'; 10"; 10‴).

7. The adjusting device according to one of the preceding claims, wherein the movable body (2; 2'; 2") is configured as a carriage, wherein the adjusting device comprises a linear guide (8a, 8b), preferably in the form of a rolling guide, and wherein the movable body (2; 2'; 2") is guided on the base body (1; 1'; 1") by means of the linear guide (8a, 8b).

8. The adjusting device according to claim 7, wherein the linear guide (8a, 8b) comprises a linear guide element (8a), in particular in the form of a rail, wherein the linear guide element (8a) is axially immovably connected to the base body (1'; 1"), wherein the movable body (2'; 2") is guided on the linear guide element (8a) of the linear guide, and wherein the auxiliary body (10'; 10") is also guided on the linear guide element (8a) of the linear guide, the auxiliary body (10'; 10") preferably being fixable to the linear guide element (8a) of the linear guide by a clamping device (9'; 9").

9. The adjusting device according to claim 7,
wherein the adjusting device comprises an auxiliary guide (13) which is formed separately from the linear guide (8a, 8b), and wherein the auxiliary body (9) is guided on the base body (1) by means of the auxiliary guide (13),
wherein the auxiliary guide (13) preferably comprises a linear guide element, in particular in the form of a rail or rod, wherein the linear guide element of the auxiliary guide is axially immovably connected to the base body (1), wherein the auxiliary body (9) is guided on the linear guide element of the auxiliary guide (13), and wherein the auxiliary body (9) is fixable to the linear guide element of the auxiliary guide (13) by clamping.

10. The adjusting device according to any one of claims 1 to 6,
wherein the movable body (2‴) is configured as a swivel body (14) which is mounted on the base body (1‴) so as to swivel about a swivel axis (14a),
the adjusting device preferably comprising a guide element (19) which extends along at least a partial ring and is connected to the base body (1‴) in a rotationally fixed manner with respect to the swivel axis (14a), the auxiliary body (10‴) being guided on the guide element (19), and
wherein the auxiliary body (10‴) is fixable to the guide element (19) extending along at least a partial ring preferably by a clamping device (9‴).

11. A machine tool, in particular gear cutting machine (26), comprising an adjusting device according to any one of the preceding claims.

12. A method of machining a workpiece (23) with a machine tool according to claim 11, comprising the following steps:
releasing the auxiliary body (10; 10'; 10"; 10‴) from the base body (1; 1'; 1"; 1‴);
moving the movable body (2; 2'; 2"; 2‴) relative to the base body (1; 1'; 1"; 1‴) by means of the drive (3) while the auxiliary body (10; 10'; 10"; 10‴) is detached from the base body (1; 1'; 1"; 1‴);
fixing the auxiliary body (10; 10'; 10"; 10‴) to the base body (1; 1'; 1"; 1‴); and
machining the workpiece (23) while the auxiliary body (10; 10'; 10"; 10‴) is fixed (1; 1'; 1"; 1‴) to the base body.

13. The method according to claim 12, wherein the movable body (2; 2'; 2"; 2‴) is moved relative to the base body (1; 1'; 1"; 1‴) during machining of the workpiece (23) by means of the drive (3), while the auxiliary body (2; 2'; 2"; 2‴) remains fixed to the base body (1; 1'; 1"; 1‴).

14. The method according to claim 12 or 13, comprising:
modifying the damping characteristics of the at least one vibration damper (11; 11'; 11"; 11‴).

15. The method according to claim 14, comprising:
performing a frequency response analysis; and
automatically changing the damping characteristics of the at least one vibration damper (11; 11'; 11"; 11‴) based on a result of the frequency response analysis.

## Revendications

1. Dispositif de réglage pour une machine-outil, en particulier une machine à tailler des engrenages (26), présentant:
un corps de base (1; 1'; 1"; 1‴);
un corps mobile (2; 2'; 2"; 2‴) qui est mobile le long d'une direction de déplacement (X; Y; Z; A) par rapport au corps de base (1; 1'; 1"; 1‴); et
un entraînement (3) pour déplacer le corps mobile (2; 2'; 2"; 2‴) par rapport au corps de base (1; 1'; 1"; 1‴);
un corps auxiliaire (10; 10'; 10"; 10‴) qui est mobile conjointement avec le corps mobile (2; 2'; 2"; 2'") par rapport au corps de base (1; 1'; 1"; 1'"); et
au moins un amortisseur de vibrations (11; 11'; 11"; 11‴), qui est disposé entre le corps auxiliaire (10; 10'; 10"; 10‴) et le corps mobile (2; 2'; 2"; 2'"), en particulier au moins un amortisseur de vibrations actif ou passif,
**caractérisé en ce que** le corps auxiliaire peut être fixé de manière amovible au corps de base (1; 1'; 1"; 1‴) et, à l'état détaché, peut être déplacé conjointement avec le corps mobile (2; 2'; 2"; 2‴) par rapport au corps de base (1; 1'; 1"; 1‴).

2. Dispositif de réglage selon la revendication 1, le dispositif de réglage comprenant deux amortisseurs de vibrations (11; 11'; 11"; 11‴) disposés entre le corps auxiliaire (10; 10'; 10"; 10‴) et le corps mobile (2; 2'; 2"; 14), les deux amortisseurs de vibrations (11; 11'; 11") étant disposés sur le corps mobile (2; 2'; 2"; 2'") de manière symétrique par rapport à un plan normal (E1) s'étendant perpendiculairement à la direction de déplacement (X; Y; Z; A).

3. Dispositif de réglage selon l'une quelconque des revendications précédentes,
ledit au moins un amortisseur de vibrations (11; 11'; 11"; 11'") présentant des propriétés d'amortissement modifiable, et
le dispositif de réglage comprenant en option un dispositif pour effectuer une analyse de réponse en fréquence, qui est en liaison opérationnelle avec l'au moins un amortisseur de vibrations (11; 11'; 11"; 11‴), afin de modifier automatiquement ses propriétés d'amortissement à l'aide d'un résultat de l'analyse de réponse en fréquence.

4. Dispositif de réglage selon l'une quelconque des revendications précédentes, dans lequel le corps auxiliaire (10; 10'; 10"; 10'") peut être fixé au corps de base (1; 1'; 1"; 1‴) par un dispositif de serrage (9; 9'; 9"; 9‴).

5. Dispositif de réglage selon l'une quelconque des revendications précédentes, le dispositif de réglage comprenant au moins un actionneur à commande numérique pour fixer le corps auxiliaire (10; 10'; 10"; 10‴) sur le corps de base (1; 1'; 1"; 1‴) et/ou le détacher du corps de base (1; 1'; 1"; 1‴).

6. Dispositif de réglage selon l'une quelconque des revendications précédentes, le dispositif de déplacement comprenant au moins un capteur (17) pour déterminer une ou plusieurs des grandeurs suivantes: une course entre le corps auxiliaire (10; 10'; 10"; 10‴) et le corps mobile (2; 2'; 2"; 2'"); une force entre le corps auxiliaire (10; 10'; 10"; 10‴) et le corps mobile (2; 2'; 2"; 2'") et une accélération du corps mobile (2; 2'; 2"; 2'") par rapport au corps auxiliaire (10; 10'; 10"; 10'").

7. Dispositif de réglage selon l'une quelconque des revendications précédentes, dans lequel le corps mobile (2; 2'; 2") est réalisé sous la forme d'un chariot, le dispositif de réglage comprenant un guidage linéaire (8a, 8b), de préférence sous la forme d'un guidage à roulement, le corps mobile (2; 2'; 2") étant guidé sur le corps de base (1; 1'; 1") au moyen du guidage linéaire (8a, 8b).

8. Dispositif de réglage selon la revendication 7, dans lequel le guidage linéaire (8a, 8b) comprend un élément de guidage linéaire (8a), en particulier sous la forme d'un rail, dans lequel l'élément de guidage linéaire (8a) est relié de manière axialement immobile au corps de base (1'; 1"), dans lequel le corps mobile (2'; 2") est guidé sur l'élément de guidage linéaire (8a) du guidage linéaire, et dans lequel le corps auxiliaire (10'; 10") est également guidé sur l'élément de guidage linéaire (8a) du guidage linéaire, le corps auxiliaire (10'; 10") pouvant être fixé de préférence par un dispositif de serrage (9'; 9") sur l'élément de guidage linéaire (8a) du guidage linéaire.

9. Dispositif de réglage selon la revendication 7,
dans lequel le dispositif de réglage comprend un guidage auxiliaire (13) qui est réalisé séparément du guidage linéaire (8a, 8b), et dans lequel le corps auxiliaire (9) est guidé sur le corps de base (1) au moyen du guidage auxiliaire (13),
le guidage auxiliaire (13) présentant de préférence un élément de guidage linéaire, en particulier sous la forme d'un rail ou d'une barre, l'élément de guidage linéaire du guidage auxiliaire étant relié de manière axialement immobile au corps de base (1), le corps auxiliaire (9) étant guidé sur l'élément de guidage linéaire du guidage auxiliaire (13), et le corps auxiliaire (9) pouvant être fixé par serrage sur l'élément de guidage linéaire du guidage auxiliaire (13).

10. Dispositif de réglage selon l'une quelconque des revendications 1 à 6,
le corps mobile (2'") étant conçu comme un corps pivotant (14) qui est monté sur le corps de base (1‴) de manière à pouvoir pivoter autour d'un axe de pivotement (14a),
le dispositif de réglage présentant de préférence un élément de guidage (19) s'étendant au moins en forme d'anneau partiel, qui est relié au corps de base (1‴) de manière solidaire en rotation par rapport à l'axe de pivotement (14a), le corps auxiliaire (10'") étant guidé sur l'élément de guidage (19), et
le corps auxiliaire (10'") pouvant être fixé sur l'élément de guidage (19) s'étendant au moins en forme d'anneau partiel de préférence par un dispositif de serrage (9‴).

11. Machine-outil, en particulier une machine à tailler des engrenages (26), comprenant un dispositif de réglage selon l'une quelconque des revendications précédentes.

12. Procédé d'usinage d'une pièce (23) avec une machine-outil selon la revendication 11, comprenant les étapes suivantes:
détacher le corps auxiliaire (10; 10'; 10"; 10‴) du corps de base (1; 1'; 1"; 1'");
déplacer le corps mobile (2; 2'; 2"; 2'") par rapport au corps de base (1; 1'; 1"; 1‴) au moyen de l'entraînement (3), tandis que le corps auxiliaire (10; 10'; 10"; 10‴) est détaché du corps de base (1; 1'; 1"; 1'");
fixer le corps auxiliaire (10; 10'; 10"; 10‴) au corps de base (1; 1'; 1"; 1‴); et
usiner la pièce (23), tandis que le corps auxiliaire (10; 10'; 10"; 10‴) est fixé (1; 1'; 1"; 1‴) au corps de base.

13. Procédé selon la revendication 12, dans lequel le corps mobile (2; 2'; 2"; 2'") est déplacé par rapport au corps de base (1; 1'; 1"; 1‴) pendant l'usinage de la pièce (23) au moyen de l'entraînement (3), tandis que le corps auxiliaire (2; 2'; 2"; 2‴) reste fixé au corps de base (1; 1'; 1"; 1‴).

14. Procédé selon la revendication 12 ou 13, comprenant:
ajuster les caractéristiques d'amortissement de l'au moins un amortisseur de vibrations (11; 11'; 11"; 11‴).

15. Procédé selon la revendication 14, comprenant:
effectuer une analyse de la réponse en fréquence; et
modifier automatiquement les propriétés d'amortissement de l'au moins un amortisseur de vibrations (11; 11'; 11"; 11‴) à l'aide d'un résultat de l'analyse de la réponse en fréquence.
